# EUROPÄISCHE PATENTSCHRIFT

(11) **EP 2 587 077 B1**
(45) Veröffentlichungstag und Bekanntmachung des Hinweises auf die Patenterteilung: **26.04.2017**
(21) Anmeldenummer: 11187184.4
(22) Anmeldetag: 28.10.2011
(51) Int. Cl.: F16C 17/02, F16C 33/08, F24F 13/14

(54) **Geschlitzte Lagerringe mit Labyrinthdichtung für Luftklappenantriebe**
Split bearing rings with labyrinth seal for vent flap drives
Paliers fendus dotés d'un joint à labyrinthe pour entraînements de volet d'aération

(43) Veröffentlichungstag der Anmeldung: 01.05.2013
(73) Patentinhaber: Siemens Schweiz AG, 8047 Zürich (CH)
(72) Erfinder: Geiger, Fabian, 6410 Goldau (CH); Grossenbacher, Christian, 5622 Waltenschwil (CH)
(74) Vertreter: Maier, Daniel Oliver

(56) Entgegenhaltungen:
- DE-A1- 10 110 383
- DE-A1- 19 530 003
- DE-A1-102004 063 660
- DE-U1- 8 010 220
- GB-A- 2 466 516
- US-A- 4 909 638

## Beschreibung

### Technisches Gebiet

Die vorliegende Erfindung betrifft einen Antrieb zur Verstellung einer Luftklappe eines Gebäudes sowie ein Verfahren zur Verstellung einer Luftklappe eines Gebäudes. Ein System mit verstellbaren Luftklappen ist z.B. aus DE 80 10 220 U1 bekannt.

### Hintergrund der Erfindung

In modernen Gebäuden werden steuerbare Luftklappen eingesetzt, um eine bessere Regelung des Gebäudeklimas zu erzielen. Insbesondere werden häufiger dezentrale Lüftungsanlagen sowie individuell regelbare Einzelraumlüftungen, welche eine höherwertige Regelstrategie benötigen, eingesetzt, um individuell angeordnete Luftklappen gezielt zu öffnen und zu schließen. Dies führt zu einem wachsenden Bedarf an Luftklappensystemen bzw. zu Antrieben zur Verstellung von Luftklappen.

Die Antriebe für Luftklappen werden häufig in kleinen und schwierig zugänglichen Einbauräumen an Gebäuden angeordnet, wie beispielsweise in Zwischendecken oder Doppelböden. Daher ist der Anspruch an Funktion und Dauerhaftigkeit der Luftklappenantriebe hoch.

### Darstellung der Erfindung

Es ist eine Aufgabe der vorliegenden Erfindung, einen robusten und exakt steuerbaren Luftklappenantrieb für eine Verstellung von Luftklappen bereitzustellen.

Die Aufgabe wird durch einen Antrieb zur Verstellung einer Luftklappe eines Gebäudes und durch ein Verfahren zur Verstellung einer Luftklappe eines Gebäudes gemäß den unabhängigen Ansprüchen gelöst.

Gemäß einem ersten Aspekt der vorliegenden Erfindung wird ein Antrieb zur Verstellung einer Luftklappe eines Gebäudes beschrieben. Der Antrieb weist einen Grundkörper mit einer Aufnahmeöffnung, einen Lagerring und eine Nabe auf. Der Lagerring ist in der Aufnahmeöffnung angeordnet und an dem Grundkörper befestigt. Der Lagerring weist eine Umfangsrichtung auf, wobei der Lagerring in Umfangsrichtung ein erstes Ende und ein zweites Ende aufweist, wobei das erste Ende und das zweite Ende in Umfangsrichtung beabstandbar sind, so dass ein Spalt zwischen dem ersten Ende und dem zweiten Ende bereitgestellt ist. Die Nabe dient zum Antrieb einer Abtriebswelle der Luftklappe. Die Nabe ist derart an dem Lagerring befestigt, dass die Nabe gegenüber dem Lagerring drehbar an dem Grundkörper gelagert ist.

Gemäß eines weiteren Aspekts der vorliegenden Erfindung wird ein Verfahren zur Verstellung einer Luftklappe eines Gebäudes beschrieben. Gemäß dem Verfahren wird eine Luftklappe mittels des oben beschriebenen Antriebs verstellt. Gemäß eines weiteren Aspekts der vorliegenden Erfindung wird ein Verstellmechanismus für Luftklappen eines Gebäudes beschrieben. Der Verstellmechanismus weist den oben beschriebenen Antrieb auf sowie zumindest eine Luftklappe. Die Luftklappe weist eine Abtriebswelle auf, welche in der Nabe des Antriebs drehfest befestigt ist. Die Nabe ist beispielsweise mittels eines elektrischen Motors des Antriebs drehbar, so dass dadurch die Abtriebswelle der Luftklappe gedreht wird und sich somit eine Verstellung der Luftklappe ergibt.

Der Grundkörper des Antriebs weist beispielsweise ein Gehäuse sowie eine Montageplatte auf, auf welcher die einzelnen Elemente des Antriebs, wie beispielsweise der Lagerring, montierbar sind. Der Grundkörper besteht beispielsweise aus einem Metall, insbesondere einem Leichtmetall, wie beispielsweise Aluminium, oder aus einem Kunststoffmaterial. Beispielsweise werden Kunststoff-Lagerringe in Kombination mit einer Metallnabe und einem Metallgehäuse verwendet.

Die Nabe zum Antrieb einer Abtriebswelle der Luftklappe kann aus einem Kunststoffmaterial oder einem Metall hergestellt werden. Insbesondere kann die Nabe aus einem Zinkmaterial bestehen und eine Zinkdruckgussnabe darstellen.

Die Nabe kann ferner einen weiteren Antriebsbereich aufweisen, welcher beispielsweise ein Antriebsrad ausbildet. Dieses Antriebsrad weist an einer Außenfläche ein Zahnprofil auf, in welchem ein Antriebselement zum Beispiel eines Elektromotors des Antriebs eingreift. Der Elektromotor kann durch eine Steuereinheit gezielt gesteuert werden, um eine gewünschte Verdrehung des Antriebselements und somit des Antriebsrades zu erzielen. Das Antriebsrad der Nabe dreht um einen bestimmten Betrag, so dass über die Nabe auch die Abtriebswelle der Luftklappe gezielt verstellt wird und eine gewünschte Positionsänderung und Verstellung der Luftklappe gesteuert wird.

Der Lagerring gemäß der vorliegenden Erfindung wird als geschlitzter Lagerring ausgebildet, bei welchem sich in Umfangsrichtung zwischen dem ersten Ende und dem zweiten Ende ein Abstand bzw. ein Spalt bzw. Schlitz einstellt. Der Lagerring ist mittels Befestigungsmitteln, wie beispielsweise Schrauben, Klebverbindungen oder mittels einer weiter unten beschriebenen Befestigungsmethode bestehend aus einem Pin, welcher in eine Befestigungsöffnung eingreift, an dem Grundkörper befestigt. An einer Oberfläche des Lagerrings, beispielsweise an seiner radial nach innen gerichteten Oberfläche und/oder an einer Axialfläche des Lagerrings wird die Nabe befestigt, so dass die Nabe gegenüber dem Lagerring drehbar gelagert ist. Zwischen den axialen und radialen Berührflächen der Nabe und dem Lagerring wird mit anderen Worten eine Gleitlagerung bereitgestellt. Ferner kann die Nabe mit dem Lagerring fest (d.h. drehfest) verbunden sein und eine Gleitlagerung bzw. eine relative Drehbarkeit zwischen dem Grundkörper und dem Lagerring bereitstallbar sein.

Aufgrund des Spalts zwischen dem ersten Ende und dem zweiten Ende des Lagerrings ist der Lagerring flexibel, so dass sich das erste Ende und das zweite Ende voneinander entfernen und nähern können, so dass beispielsweise insbesondere der Durchmesser des Lagerrings insbesondere durch eine elastische Verformung des Lagerrings änderbar ist. Dadurch können beispielsweise Temperaturänderungen und die damit verbundene thermische Ausdehnung ausgeglichen werden. Mit anderen Worten entstehen weniger thermische Spannungen, insbesondere zwischen dem Lagerring, dem Grundkörper und der Nabe. Ferner kann eine ungenaue Winkelpositionierung zwischen Nabe und Abtriebswelle bzw. Welle der Luftklappe ausgeglichen werden. Der Spalt ermöglicht die Vorgabe größerer Fertigungstoleranzen des vorgegebenen Durchmessers des Lagerrings, so dass ein einfacheres und effizienteres Herstellverfahren der Lagerringe verwendbar ist. Ferner führt der flexible und anpassbare Lagerring zu einer Reduktion des Lagerspiels zwischen dem Grundkörper und der Nabe, sodass eine höhere Präzision der Lagerung der Abtriebswelle bezüglich dem Antrieb möglich ist. Der Lagerkörper besteht z.B. aus einem Aluminiumdruckgussgehäuse, dem Lagerring, bestehend beispielsweise aus Kunststoff, und der Nabe, bestehend beispielsweise aus einem Zinkdruckgussmaterial oder Kunststoff. Die Reduktion des Lagerspiels wird durch einen flexiblen Längsausgleich (mittels des Spalts) des Lagerrings bei unterschiedlichen Temperaturen ermöglicht.

Die Aufnahmeöffnung des Grundkörpers, die Nabe sowie der Lagerring weisen insbesondere einen gemeinsamen Mittelpunkt auf. Durch den Mittelpunkt verlaufen die Drehachsen der Nabe und der Abtriebswelle. Die Richtung, welche entlang einer gemeinsamen Ebene, deren Normale parallel zu der Drehachse ist, durch den Mittelpunkt verläuft, wird im Folgenden als Radialrichtung bezeichnet. Die Richtung, welche sich auf der Mantelfläche der Nabe bzw. des Lagerrings senkrecht zur Radialrichtung und senkrecht zu der Axialrichtung erstreckt, wird im Folgenden als Umfangsrichtung bezeichnet.

Gemäß einer weiteren beispielhaften Ausführungsform weist das erste Ende eine erste Fläche bzw. eine erste Ebene, in welcher die erste Fläche liegt, mit einer ersten Flächennormalen auf und das zweite Ende weist eine der ersten Fläche gegenüberliegenden zweiten Fläche bzw. zweiten Ebene, in welcher die zweite Fläche liegt, mit einer zweiten Flächennormale auf. Die erste Fläche und die zweite Fläche bilden somit zwei in Umfangsrichtung gegenüberliegende Flächen, zwischen welchen ersten und zweiten Flächen sich der Spalt bildet.

In einer weiteren beispielhaften Ausführungsform der vorliegenden Erfindung verlaufen die erste Flächennormale und die zweite Flächennormale antiparallel zueinander. Die erste Flächennormale weist eine erste Komponente auf und die zweite Flächennormale weist eine zweite Komponente auf, wobei zumindest die erste Komponente und die zweite Komponente antiparallel verlaufen. Ferner können die erste Flächennormale und die zweite Flächennormale in Umfangsrichtung verlaufen.

Gemäß einer weiteren beispielhaften Ausführungsform der vorliegenden Erfindung weist die erste Flächennormale und die zweite Flächennormale einen Winkel zueinander auf. Der Winkel kann insbesondere zwischen ungefähr ±0,5° und ungefähr ±40° Grad bzw. insbesondere zwischen ungefähr ±1° und ungefähr ±20° aufweisen. Mit anderen Worten ist die erste Fläche derart ausgebildet, dass die erste Flächennormale zu einer ersten, durch den Mittelpunkt des Lagerrings der ersten Fläche verlaufenden Bezugsgerade (insbesondere entlang der Radialrichtung verlaufende Gerade) einen Winkel beispielsweise zwischen ungefähr 70° und ungefähr 110° Grad aufweist. Die zweite Fläche kann derart ausgebildet sein, dass die zweite Flächennormale zu einer zweiten, durch den Mittelpunkt des Lagerrings und die zweite Fläche verlaufenden Bezugsgerade (entlang einer Radialrichtung) einen zweiten Winkel zwischen ungefähr 70° und ungefähr 110° Grad aufweist. Der erste Winkel und der zweite Winkel unterscheiden sich voneinander.

Mit anderen Worten können die erste Fläche und die zweite Fläche nicht parallel zueinander ausgebildet sein. Insbesondere beim Gießen oder Formpressen des Lagerrings aus Kunststoff oder aus Metall bieten sich dadurch Vorteile. Beispielsweise kann zwischen den nicht parallelen ersten und zweiten Flächen ein Abstandshalter, wie beispielsweise ein Keil, angebracht werden, welcher nach Aushärtung des gefertigten Lagerrings in einfacher Art und Weise entfernt werden kann. Somit kann der Lagerring einfacher und effizienter hergestellt werden.

Gemäß einer weiteren beispielhaften Ausführungsform weist das erste Ende einen Stift auf, welcher sich von der ersten Fläche in Umfangsrichtung erstreckt. Das zweite Ende weist eine Aufnahmenut auf, in welche der Stift einschiebbar ist. Der Stift und die Aufnahmenut bilden in axialer Richtung des Lagerrings eine Berührfläche aus. Aufgrund der Berührfläche in axialer Richtung stellt der Lagerring eine hohe Dichtigkeit in Axialrichtung bereit, da der Spalt nur zwischen den Flächen, deren Normalen in Umfangsrichtung gerichtet sind. In axialer Richtung hingegen überlappen sich der Stift und die Aufnahmenut und bilden die Berührfläche aus, so dass kein Durchgang in axialer Richtung bereitgestellt wird, womit sich eine Dichtigkeit einstellt.

Gemäß einer weiteren beispielhaften Ausführungsform weist das zweite Ende einen weiteren Stift auf, welcher sich von der zweiten Fläche in Umfangsrichtung erstreckt. Das erste Ende weist eine weitere Aufnahmenut auf, in welcher der weitere Stift einschiebbar ist. Der weitere Stift und die weitere Aufnahmenut bilden in axialer Richtung des Lagerrings eine weitere Berührfläche aus.

Mit anderen Worten sind an jeweils dem ersten Ende und dem zweiten Ende in axialer Richtung hintereinander ein, zwei oder mehrere Stifte mit dazwischen liegenden Aufnahmeöffnungen ausgebildet. In die Aufnahmeöffnungen greifen jeweils die von dem anderen Ende in Umfangsrichtung hinausragenden Stifte ein. An dem ersten Ende und dem zweiten Ende des Lagerrings werden mittels der Stifte sozusagen Lamellen gebildet, so dass eine Labyrinthdichtung zwischen dem ersten Ende und dem zweiten Ende ausgebildet ist. Somit wird in axialer Richtung eine hohe Dichtigkeit auch in dem Übergangsbereich zwischen dem ersten Ende und dem zweiten Ende bereitgestellt.

Gemäß einer weiteren beispielhaften Ausführungsform weist zumindest einer von dem Lagerring oder von dem Grundkörper eine Befestigungsöffnung auf, wobei der entsprechende andere Lagerring oder Grundkörper einen hervorragenden Pin aufweist. Der Pin greift in die Befestigungsöffnung derart ein, dass der Lagerring an dem Grundkörper befestigt ist. Beispielsweise kann der Pin eine Hinterschneidung aufweisen, so dass er durch die Befestigungsöffnung hindurchgesteckt werden kann und sich der Pin mittels der Hinterschneidung an dem Randbereich der Befestigungsöffnung verhakt. Somit ist eine einfach montierbare Klickverbindung möglich.

Gemäß einer weiteren beispielhaften Ausführungsform ist die Befestigungsöffnung ein Langloch, welches der Länge nach in Umfangsrichtung ausgebildet ist. Die in Umfangsrichtung ausgebildete Länge der Befestigungsöffnung bildet einen Bereich aus, in welchem sich der Pin in Umfangsrichtung bewegen kann. Somit werden Verspannungen am Lagerring reduziert, welche sich aufgrund eines Auseinanderspreizens des ersten Endes und des zweiten Endes des Lagerrings ergeben. Spreizt sich beispielsweise das erste Ende von dem zweiten Ende auseinander, so kann der Pin entlang des Langlochs verschoben werden, so dass mögliche Verspannungen reduziert sind. Das Längenprofil des Langlochs kann gekrümmt und übereinstimmend mit der Umfangsrichtung verlaufen oder linear und geradlinig und somit nur in einem kleinen Bereich mit der Umfangsrichtung übereinstimmen.

Gemäß einer weiteren beispielhaften Ausführungsform weist die Befestigungsöffnung ein Langloch auf, dessen Länge sich in Radialrichtung erstreckt. Bei einer Änderung des Abstands zwischen dem ersten Ende und dem zweiten Ende kann der Pin sich somit auch innerhalb des weiteren Langlochs in Radialrichtung bewegen, so dass ein weiterer Freiheitsgrad gegeben ist, um Verspannungen des Lagerrings aufgrund einer Abstandsänderung zwischen dem ersten Ende und dem zweiten Ende zu reduzieren.

Der Lagerring und der Grundkörper können mehrere entsprechende Befestigungsöffnungen und darin befestigbare Pins aufweisen. Die Befestigungsöffnungen können jeweils Langlöcher mit radialer und in Umfangsrichtung erstreckender Längenausdehnung aufweisen. Auch kann ein kombiniertes Langloch am Grundkörper oder am Lagerring ausgebildet sein, welches eine Längenausdehnung in Umfangsrichtung aufweist und/oder eine Längsrichtung in Radialrichtung aufweist.

Der Antrieb kann ferner einen weiteren Lagerring aufweisen, welcher in der Aufnahmeöffnung angeordnet und an dem Grundkörper befestigt ist. Der weitere Lagerring kann ebenfalls in Umfangsrichtung ein erstes Ende und ein zweites Ende aufweisen, wobei das erste Ende und das zweite Ende in Umfangsrichtung beabstandbar sind, so dass ein Spalt zwischen dem ersten Ende und dem zweiten Ende bereitstellbar ist. Der Lagerring und der weitere Lagerring können in axialer Richtung hintereinander in der Aufnahmeöffnung angeordnet sein, wobei zwischen dem Lagerring und dem weiteren Lagerring die Nabe drehbar lagernd befestigt werden kann.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Es wird ferner darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine beispielhafte Ausführungsform eines Antriebs zur Verstellung einer Luftklappe mittels zweier geschlitzter Lagerringe gemäß einer beispielhaften Ausführungsform der vorliegenden Erfindung;
Fig. 2 zeigt eine schematische Darstellung eines Grundkörpers, auf welchem der Lagerring befestigt ist gemäß einer beispielhaften Ausführungsform der vorliegenden Erfindung;
Fig. 3 zeigt eine schematische Darstellung eines Lagerrings in einem auseinandergespreizten Zustand gemäß einer beispielhaften Ausführungsform der vorliegenden Erfindung;
Fig. 4 zeigt eine schematische Darstellung eines Lagerrings in einem zusammengedrückten Zustand gemäß einer beispielhaften Ausführungsform der vorliegenden Erfindung;
Fig. 5 zeigt eine vergrößerte Darstellung eines ersten Endes und eines zweiten Endes eines Lagerrings gemäß einer beispielhaften Ausführungsform der vorliegenden Erfindung; und
Fig. 6 zeigt einen Antrieb zur Verstellung einer Luftklappe gemäß einer beispielhaften Ausführungsform der Erfindung, wobei der Antrieb in einem fertig montierten Zustand dargestellt ist.

### Detaillierte Beschreibung von exemplarischen Ausführungsformen

Gleiche oder ähnliche Komponenten in den Figuren sind mit gleichen Bezugsziffern versehen. Die Darstellungen in den Figuren sind schematisch.

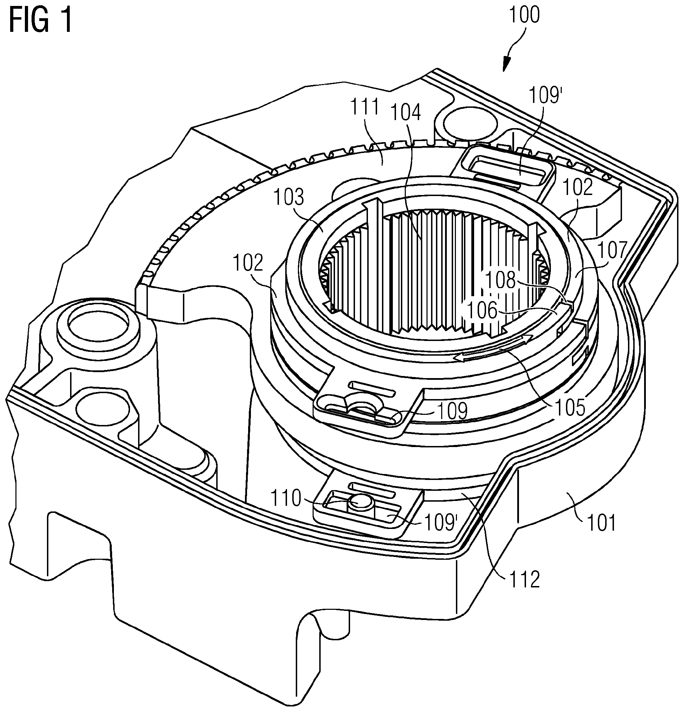

**Fig. 1** zeigt einen Antrieb 100 zur Verstellung einer Luftklappe eines Gebäudes. Der Antrieb 100 weist einen Grundkörper 101 mit einer Aufnahmeöffnung 104, einen Lagerring 102 und eine Nabe 103 zum Antrieb einer Abtriebswelle der Luftklappe auf. Der Lagerring 102 ist in der Aufnahmeöffnung 104 angeordnet und an dem Grundkörper 101 befestigt. Der Lagerring 102 weist eine Umfangsrichtung 105 auf, wobei der Lagerring 102 in Umfangsrichtung 105 ein erstes Ende 106 und ein zweites Ende 107 aufweist. Das erste Ende 106 und das zweite Ende 107 sind in Umfangsrichtung 105 beabstandbar, so dass ein Spalt 108 zwischen dem ersten Ende 106 und dem zweiten Ende 107 bereitstellbar ist. Die Nabe 103 ist derart an dem Lagerring 102 befestigt, dass die Nabe 103 gegenüber dem Lagerring 102 drehbar an dem Grundkörper 101 gelagert ist.

Die Nabe 103 ist an ein Antriebsrad 111 gekoppelt. Das Antriebsrad 111 und die Nabe 103 können integral und einstückig oder mehrteilig ausgebildet sein. Ein Antriebsmotor, wie beispielsweise ein elektrischer Servomotor (nicht dargestellt) des Antriebs 100 greift beispielsweise über eine Zahnverbindung in das Antriebsrad 111 ein. Der Servomotor treibt das Antriebsrad 111 und somit die Nabe 103 an, bis die Nabe 103 eine gewünschte Position einnimmt. In der Nabe 103 kann als Abtriebswelle eine Welle einer Luftklappe drehfest befestigt werden, so dass eine Verstellung der Nabe 103 eine Verstellung der Luftklappe bewirkt, um die Position der Luftklappe eines Gebäudes einzustellen. Die Nabe 103 ist über den Lagerring 102 und über einen weiteren Lagerring 112 an dem Grundkörper 101 drehbar gelagert. Die Lagerringe 102, 112 sind an dem Grundkörper 101 befestigt und bilden zu der Nabe 103 eine Gleitfläche aus. Die Gleitfläche kann zwischen axialen Flächen (deren Normalen in Axialrichtung gerichtet sind) und/oder zwischen Radialflächen (welche Normalen in Radialrichtung 202 ausgerichtet sind) bereitgestellt werden. Der Lagerring 102 und der weitere Lagerring 112 weisen hierzu gute Gleitlagereigenschaften auf, so dass eine relative Drehbewegung zwischen der Nabe 103 und dem jeweiligen Lagerring 102, 112 einen geringen Verschleiß bewirkt. Der Lagerring 102 und der weitere Lagerring 112 können auch drehfest mit der Nabe 103 befestigt sein, wobei eine Relativbewegung (Drehung) zwischen den Lagerringen 102, 112 und dem Grundkörper 101 bereitstellbar ist.

Treten Temperaturschwankungen an dem Einbauort des Antriebs 100 auf, so können sich die jeweiligen Lagerringe 102, 112 und auch die Nabe 103 ausdehnen und zusammenziehen. Diese Zusammenzieh- und Ausdehnbewegungen können die Lagerringe 102, 112 aufgrund des Spalts zwischen ihren ersten Enden 106 und zweiten Enden 107 ausgleichen. Somit werden thermische Spannungen aufgrund wechselnder Temperaturbedingungen reduziert.

In der beispielhaften Ausführungsform in Fig. 1 weisen die Lagerringe 102, 112 an ihren Außenflächen befestigte Laschen auf, welche Befestigungsöffnungen 109, 109' aufweisen. Die Befestigungsöffnungen 109, 109' können beispielsweise als Langloch, wessen Länge sich in Umfangsrichtung erstreckt, ausgebildet sein. An dem Grundkörper 101 sind entsprechende Pins 110, 110' angeordnet, welche in die Befestigungsöffnungen 109, 109' eingreifen können.

In Fig. 1 ist lediglich eine untere Hälfte des Grundkörpers 101 zur besseren Übersicht dargestellt. Auf die untere Hälfte des Grundkörpers 101 kann eine obere Hälfte des Grundkörpers 101 befestigt werden, wobei an der oberen Hälfte beispielsweise entsprechende Pins 110, 110' angeordnet sind.

Da die Befestigungsöffnungen 109, 109' als Langloch ausgebildet sind, können sich die Pins 110, 110' entlang dieser Befestigungsöffnungen 109, 109' verschieben, so dass bei einer Annäherung oder Entfernung des ersten Endes 106 und des zweiten Endes 107 der jeweiligen Lagerringe 102, 112 ein Bewegungsfreiheitsgrad gebildet wird, so dass Verspannungen aufgrund thermischer Ausdehnung reduziert werden. Ferner dient die Befestigung des Lagerrings 102 mittels der Befestigungsöffnungen 109, 109' und der Pins 110, 110' als z.B. Transportsicherung. Für den Betrieb des Antriebs 100 können die Befestigungsöffnungen 109, 109' (bzw. die Laschen) und die Pins 110, 110' entfernt werden, da der Lagerring 102 z.B. aufgrund seiner Eigenspannung mit der Nabe 103 oder mit dem Grundkörper 101 verklemmt sein kann.

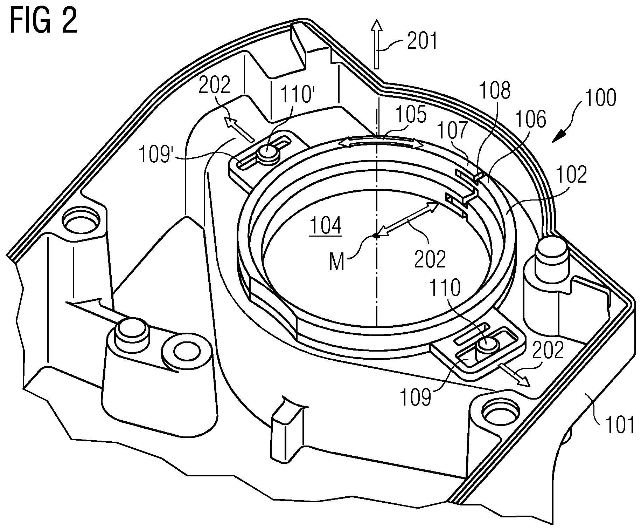

In Fig. 1 weist eine Befestigungsöffnung 109 zudem in der in Längenerstreckung in Radialrichtung ebenfalls eine Längenerstreckung in Radialrichtung 202 (siehe Fig. 2) auf. Somit kann ebenfalls ein Pin 110 einen weiteren Freiheitsgrad aufweisen, um die thermischen Spannungen, welche bei Zusammenziehens oder Ausdehnens des jeweiligen Lagerrings 102, 112 entstehen, reduziert werden. Die Längenerstreckung in Radialrichtung der Befestigungsöffnung 109 kann auch dazu dienen, dass einer der Pins 110 dort einrastet und kein Freiheitsgrad des Pins 110 in dem Langloch 109 besteht.

**Fig. 2** zeigt zur Verdeutlichung des Antriebs 100 den Grundkörper 101 und den Lagerring 102 ohne die darin befestigte Nabe 103. Die Aufnahmeöffnung 104 weist einen Mittelpunkt M auf. Von diesem Mittelpunkt in Richtung Mantelfläche des Lagerrings 109 wird die Radialrichtung 202 definiert. Senkrecht zu der Umfangsrichtung 105 und der Radialrichtung 202 wird die Axialrichtung 201 definiert. Die Axialrichtung 201 kann ebenfalls die Drehachse der Nabe 103 definieren.

In Fig. 2 ist deutlicher die Befestigung des Lagerrings 102 an dem Grundkörper 101 dargestellt. An der äußeren Mantelfläche des Lagerrings 102 sind Laschen (Befestigungsöffnungen 109, 109') ausgebildet, welche Langlöcher aufweisen.

Die Befestigungsöffnung 109, welche in Fig. 2 auf der rechten Seite des Lagerrings 102 ausgebildet ist, weist ein Langloch auf, dessen Länge sich ungefähr entlang der Umfangsrichtung 105 erstreckt. Entlang dieser Länge des Langlochs kann sich ein Pin 110 des Grundkörpers frei bewegen, so dass bei Ausdehnung des Lagerrings 102 eine Abstandsänderung zwischen dem ersten Ende 106 und dem zweiten Ende 107 und somit eine Spaltänderung 108 entsteht. Gegenüberliegend von dieser Befestigungsöffnung 109 wird eine weitere Befestigungsöffnung 109' gebildet. Die Befestigungsöffnung 109' weist einen Durchmesser auf, welcher dem Außendurchmesser eines Pins 110' entspricht. Die Befestigungsöffnung 109' weist ebenfalls ein Langloch auf, wobei das Langloch der Befestigungsöffnung 109' lediglich zur Materialeinsparung und zur flexiblen und elastischen Ausbildung der Befestigungsöffnung 109' dient, um ein leichteres Montieren der Befestigungsöffnung 109 und des Pins 110' zu ermöglichen.

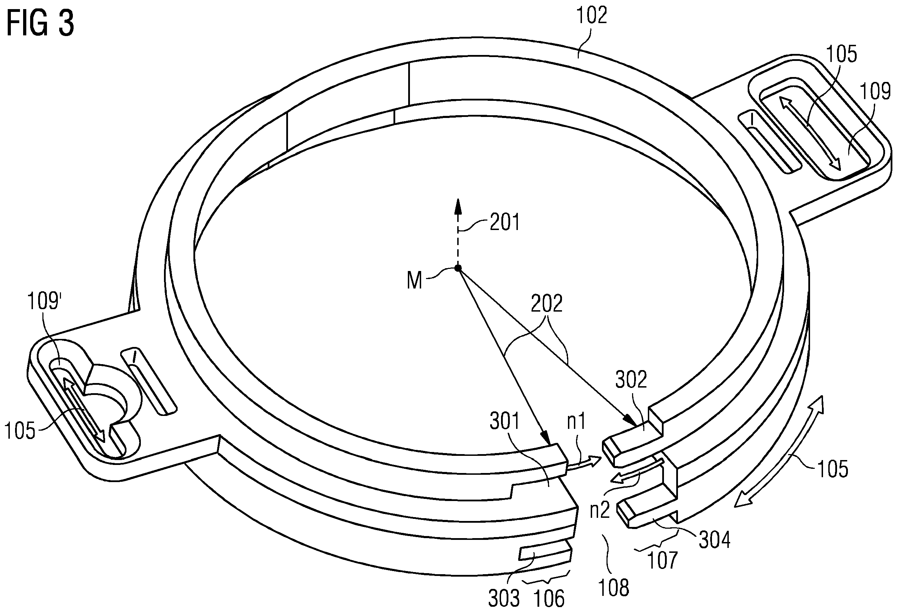

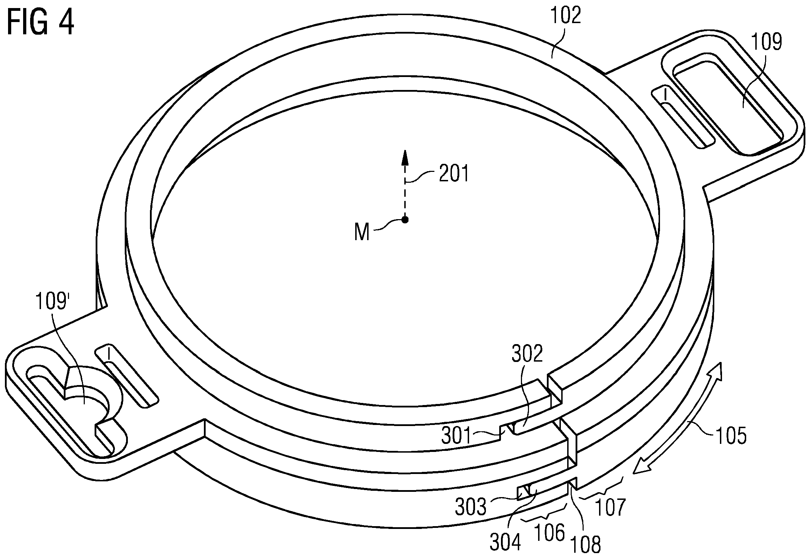

**Fig. 3** und **Fig. 4** zeigen eine vergrößerte Darstellung des Lagerrings 102, wobei insbesondere die Endbereiche 106, 107 des Lagerrings 102 dargestellt werden.

In Fig. 3 wird der Lagerring 102 in einer auseinandergespreizten Stellung dargestellt. An jeweils gegenüberliegenden Positionen auf der äußeren Mantelfläche des Lagerrings 102 sind die Laschen mit den Befestigungsöffnungen 109, 109' ausgebildet. Zwischen dem ersten Ende 106 und dem zweiten Ende 107 bildet sich der Spalt 108 aus.

Das erste Ende 106 weist insbesondere eine erste Fläche mit einer ersten Flächennormale n1 auf und das zweite Ende 107 weist eine der ersten Fläche gegenüberliegende zweite Fläche mit einer zweiten Flächennormale n2 auf. Die erste Fläche und die zweite Fläche sind durch die geschlitzte Ausbildung des Lagerrings 102 beabstandet voneinander. In einer zusammengedrückten Stellung des Lagerrings 102 können sich aufgrund der elastischen Eigenschaften des Lagerrings 102 die erste Fläche und die zweite Fläche berühren.

In Fig. 3 ist der Lagerring 102 insbesondere mit einer Labyrinthdichtung dargestellt. Die Labyrinthdichtung wird an dem ersten Ende 106 und dem zweiten Ende 107 gebildet. Dabei weist das erste Ende 106 eine Aufnahmenut 301 auf, in welcher ein an dem zweiten Ende 107 ausgebildeter Stift 302 eingeschoben werden kann. In Axialrichtung 201 bildet eine Fläche des Stifts 302 und eine Fläche der Aufnahmenut 301 eine Berührfläche aus, so dass in Axialrichtung 201 eine Dichtwirkung erzeugt wird. Um die Dichtwirkung zu erhöhen, können die jeweiligen Enden 106, 107 weitere Aufnahmenuten 303 und in diese weiteren Aufnahmenuten 303 eingreifende weitere Stifte 304 aufweisen.

In Fig. 4 wird der Lagerring 102 in einem zusammengedrückten Zustand gezeigt. Der Spalt 108 zwischen der ersten Fläche und der zweiten Fläche hat sich stark reduziert. Die Stifte 302 und die weiteren Stifte 304 sind in die Aufnahmenut 301 bzw. die weitere Aufnahmenut 303 eingefahren. Die Stifte 302, 304 bilden in Axialrichtung 201 mit den entsprechenden Flächen der Aufnahmenut 301. 303 Berührflächen aus, so dass eine hohe Dichtigkeit bereitgestellt wird.

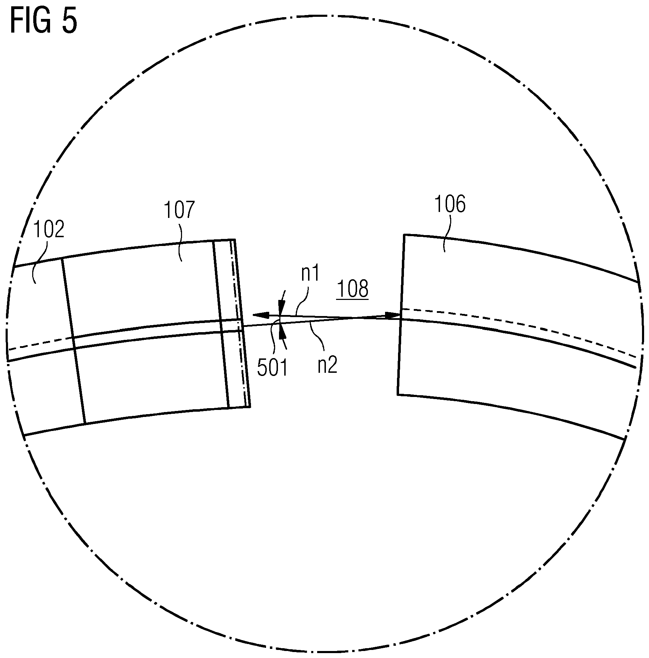

In **Fig. 5** werden die Enden 106, 107 genauer dargestellt. In einer beispielhaften Ausführungsform gemäß Fig. 5 kann die erste Flächennormale n1 der ersten Fläche und die zweite Flächennormale n2 der zweiten Fläche einen Winkel 501 zueinander aufweisen. Der Winkel 501 kann beispielsweise 1 bis 20° Grad betragen. Besteht zwischen der ersten Fläche und der zweiten Fläche der Winkel 501, welcher insbesondere ungleich 0° Grad ist, kann im Herstellungsverfahren die erste Fläche von der zweiten Fläche mittels eines Keils getrennt werden. Aufgrund der nicht parallel ausgebildeten ersten Flächen und zweiten Flächen (bzw. aufgrund des Winkels 501 zwischen den zugehörigen Flächennormalen n1, n2) kann dieser Keil einfach nach Aushärtung des Lagerrings 102 bei seiner Herstellung gelöst werden, so dass ein effizienteres Herstellverfahren bereitstellbar ist.

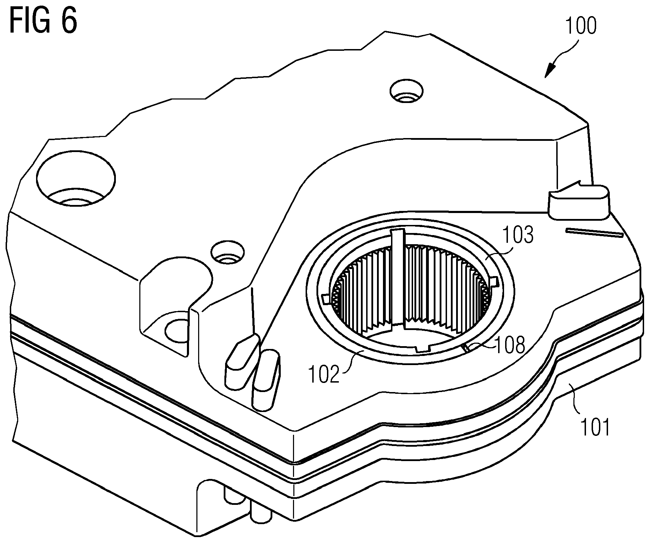

**Fig. 6** zeigt einen montierten Zustand des Antriebs 100. Der Grundkörper 101 wird aus einer Gehäuseoberschale und einer Gehäuseunterschale gebildet, welche zusammen gleichzeitig das Gehäuse des Antriebs 100 bilden. Die Nabe 103 wird drehbar in den geschlitzten Lagerring 102 gelagert. Der Lagerring 102 ist an dem Grundkörper 101 befestigt. Bei Temperaturänderungen kann sich die Nabe 103 und der jeweilige Lagerring 102 ausdehnen, da insbesondere der Lagerring 102 aufgrund des Spalts 108 ein Ausdehnen und ein Zusammenziehen ermöglicht. Somit werden thermische Spannungen reduziert.

Gleichzeitig kann der Lagerring 102 eine Labyrinthdichtung im Bereich des Spalts 108 aufweisen, welche in axialer Richtung 201 eine Dichtwirkung erzeugt. Somit kann der Lagerring 102 geschlitzt ausgeführt sein und dennoch ein Eindringen von Flüssigkeiten oder Gasen von außerhalb des Antriebs 100 in das Innere des Antriebs 100 verhindern.

Mittels des Lagerrings 102 wird somit einerseits ein robuster Antrieb 100 gegenüber thermischen Spannungen geschaffen, ohne dass eine Dichtigkeit gegenüber äußeren Einflüssen reduziert wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Antrieb
- 101: Grundkörper
- 102: Lagerring
- 103: Nabe
- 104: Aufnahmeöffnung
- 105: Umfangsrichtung
- 106: erstes Ende
- 107: zweites Ende
- 108: Spalt
- 109, 109': Befestigungsöffnung
- 110, 110': Pin
- 111: Antriebsrad
- 112: weiterer Lagerring

- 201: Axialrichtung
- 202: Radialrichtung

- 301: Aufnahmenut
- 302: Stift
- 303: weitere Aufnahmenut
- 304: weiterer Stift

- 501: Winkel

- n1: erste Flächennormale
- n2: zweite Flächennormale
- M: Mittelpunkt

## Patentansprüche

1. Antrieb (100) für eine Verstellung einer Luftklappe eines Gebäudes, der Antrieb (100) aufweisend
einen Grundkörper (101) mit einer Aufnahmeöffnung (104), einen geschlitzten Lagerring (102), welcher in der Aufnahmeöffnung (104) angeordnet und an dem Grundkörper (101) befestigt ist, wobei der Lagerring (102) eine Umfangsrichtung (105) aufweist, wobei der Lagerring (102) in Umfangsrichtung (105) ein erstes Ende (106) und ein zweites Ende (107) aufweist,
wobei das erste Ende (106) und das zweite Ende (107) in Umfangsrichtung (105) beabstandbar sind, sodass ein Spalt (108) zwischen dem ersten Ende (106) und dem zweiten Ende (107) bereitgestellt ist, und
eine Nabe (103) zum Antrieb einer Abtriebswelle der Luftklappe,
wobei die Nabe (103) derart an dem Lagerring (102) befestigt ist, dass die Nabe (103) gegenüber dem Lagerring (102) drehbar an dem Grundkörper (101) gelagert ist.

2. Antrieb (100) nach Anspruch 1,
wobei das erste Ende (106) eine erste Fläche mit einer ersten Flächennormalen (n1) aufweist, und
wobei das zweite Ende (107) eine der ersten Fläche gegenüberliegende zweite Fläche mit einer zweiten Flächennormalen (n2) aufweist.

3. Antrieb (100) nach Anspruch 2,
wobei die erste Flächennormale (n1) und die zweite Flächennormale (n2) antiparallel zueinander verlaufen, und/oder
wobei die erste Flächennormale (n1) und die zweite Flächennormale (n2) in Umfangsrichtung (105) verlaufen.

4. Antrieb (100) nach Anspruch 2,
wobei die erste Flächennormale (n1) und die zweite Flächennormale (n2) einen Winkel (501) zueinander, insbesondere einen Winkel (501) von 1 bis 20 Grad zueinander, aufweisen.

5. Antrieb (100) nach einem der Ansprüche 1 bis 4,
wobei das erste Ende (106) einen Stift (302) aufweist, welcher sich von der ersten Fläche in Umfangsrichtung (105) erstreckt,
wobei das zweite Ende (107) eine Aufnahmenut (301) aufweist, in welcher der Stift (302) einschiebbar ist,
wobei der Stift (302) und die Aufnahmenut (301) in axialer Richtung des Lagerrings (102) eine Berührfläche ausbilden.

6. Antrieb (100) nach Anspruch 5,
wobei das zweite Ende (107) einen weiteren Stift (304) aufweist, welcher sich von der zweien Fläche in Umfangsrichtung (105) erstreckt,
wobei das erste Ende (106) eine weitere Aufnahmenut (303) aufweist, in welcher der weitere Stift (304) einschiebbar ist, und
wobei der weitere Stift (304) und die weitere Aufnahmenut (303) in axialer Richtung des Lagerrings (102) eine weitere Berührfläche ausbilden.

7. Antrieb (100) nach einem der Ansprüche 1 bis 6,
wobei zumindest einer von dem Lagerring (102) oder von dem Grundkörper (101) eine Befestigungsöffnung (109) aufweist,
wobei der entsprechend andere Lagerring (102) oder Grundkörper (101) einen hervorragenden Pin (110) aufweist, und
wobei der Pin (110) in die Befestigungsöffnung (109) derart eingreift, dass der Lagerring (102) an dem Grundkörper (101) befestigt ist.

8. Antrieb (100) nach Anspruch 7,
wobei die Befestigungsöffnung (109) ein Langloch aufweist, welche Länge sich in Umfangsrichtung (105) erstreckt.

9. Antrieb (100) nach Anspruch 7 oder 8,
wobei die Befestigungsöffnung (109) ein weiteres Langloch aufweist, welche Länge sich in Radialrichtung (202) erstreckt.

10. Verfahren zur Verstellung einer Luftklappe eines Gebäudes, das Verfahren aufweisend
Verstellen der Luftklappe mittels eines Antriebs (100) nach einem der Ansprüche 1 bis 9.

## Claims

1. Drive (100) for adjusting an air flap of a building, the drive (100) having
a main body (101) with a receiving aperture (104),
a slotted bearing ring (102) which is arranged in the receiving aperture (104) and fastened to the main body (101), the bearing ring (102) having a circumferential direction (105), wherein the bearing ring (102) has a first end (106) and a second end (107) in the circumferential direction (105), wherein it is possible for the first end (106) and the second end (107) to be spaced apart in the circumferential direction (105), so that there is a gap (108) between the first end (106) and the second end (107), and
a hub for driving an output shaft of the air flap, wherein the hub (103) is fastened to the bearing ring (102) in such a manner that the hub (103) is supported on the main body (101) in a rotatable manner relative to the bearing ring (102).

2. Drive (100) according to claim 1,
wherein the first end (106) has a first surface with a first surface normal (n1) and
wherein the second end (107) has a second surface with a second surface normal (n2) opposite the first surface.

3. Drive (100) according to claim 2,
wherein the first surface normal (n1) and the second surface normal (n2) run antiparallel to one another, and/or
wherein the first surface normal (n1) and the second surface normal (n2) run in the circumferential direction (105).

4. Drive (100) according to claim 2,
wherein the first surface normal (n1) and the second surface normal (n2) are at an angle (501) to one another, in particular an angle (501) from 1 to 20 degrees.

5. Drive (100) according to one of claims 1 to 4,
wherein the first end (106) has a stud (302), which extends from the first surface in the circumferential direction (105),
wherein the second end (107) has a receiving channel (301) into which the stud (302) can be pushed,
wherein the stud (302) and receiving channel (301) form a contact surface in the axial direction of the bearing ring (102).

6. Drive (100) according to claim 5,
wherein the second end (107) has a further pin (304), which extends from the second surface in the circumferential direction (105),
wherein the first end (106) has a further receiving channel (303) into which the further stud (304) can be pushed, and
wherein the further stud (304) and the further receiving channel (303) form a further contact surface in the axial direction of the bearing ring (102).

7. Drive (100) according to one of claims 1 to 6,
wherein at least one of the bearing ring (102) or the main body (101) has a fastening aperture (109),
wherein the corresponding other bearing ring (102) or main body (101) has a projecting pin (110),
wherein the pin (110) engages in the fastening aperture (109) in such a manner that the bearing ring (102) is fastened to the main body (101).

8. Drive (100) according to claim 7,
wherein the fastening aperture (109) has a slit, its length extending in the circumferential direction (105).

9. Drive (100) according to claim 7 or 8,
wherein the fastening aperture (109) has a further slit, its length extending in the radial direction (202).

10. Method for adjusting an air flap of a building, the method comprising
adjusting the air flap by means of a drive (100) according to one of claims 1 to 9.

## Revendications

1. Dispositif d'entraînement (100) destiné à un réglage d'une bouche d'aération d'un bâtiment, ledit dispositif d'entraînement (100) présentant
un corps de base (101) avec une ouverture de réception (104), une bague de palier (102) fendue, qui est agencée dans l'ouverture de réception (104) et est fixée sur le corps de base (101), dans lequel la bague de palier (102) présente une direction périphérique (105), dans lequel la bague de palier (102) présente une première extrémité (106) et une deuxième extrémité (107) dans ladite direction périphérique (105), dans lequel la première extrémité (106) et la deuxième extrémité (107) peuvent être espacées dans la direction périphérique (105) de telle manière qu'un écartement (108) est créé entre la première extrémité (106) et la deuxième extrémité (107), et
un moyeu (103) destiné au dispositif d'entraînement d'un arbre entraîné de la bouche d'aération,
dans lequel le moyeu (103) est fixé sur la bague de palier (102) de telle manière que le moyeu (103) est monté rotatif par rapport à la bague de palier (102) sur le corps de base (101).

2. Dispositif d'entraînement (100) selon la revendication 1,
dans lequel la première extrémité (106) présente une première surface avec une première normale de surface (n1), et
dans lequel la deuxième extrémité (107) présente une deuxième surface, faisant face à la première surface, avec une deuxième normale de surface (n2).

3. Dispositif d'entraînement (100) selon la revendication 2,
dans lequel la première normale de surface (n1) et la deuxième normale de surface (n2) sont antiparallèles l'une à l'autre, et/ou
dans lequel la première normale de surface (n1) et la deuxième normale de surface (n2) s'étendent dans la direction périphérique (105).

4. Dispositif d'entraînement (100) selon la revendication 2,
dans lequel la première normale de surface (n1) et la deuxième normale de surface (n2) présentent un angle (501) l'une par rapport à l'autre, en particulier un angle (501) compris entre 1 et 20 degrés.

5. Dispositif d'entraînement (100) selon l'une quelconque des revendications 1 à 4,
dans lequel la première extrémité (106) présente un ergot (302) qui s'étend à partir de la première surface dans la direction périphérique (105),
dans lequel la deuxième extrémité (107) présente une gorge de réception (301) dans laquelle peut être inséré l'ergot (302),
dans lequel l'ergot (302) et la gorge de réception (301) forment une surface de contact dans une direction axiale de la bague de palier (102).

6. Dispositif d'entraînement (100) selon la revendication 5,
dans lequel la deuxième extrémité (107) présente un autre ergot (304), qui s'étend à partir de la deuxième surface dans la direction périphérique (105),
dans laquelle la première extrémité (106) présente une autre gorge de réception (303) dans laquelle peut être inséré l'autre ergot (304), et
dans lequel l'autre ergot (304) et l'autre gorge de réception (303) forment une autre surface de contact dans une direction axiale de la bague de palier (102).

7. Dispositif d'entraînement (100) selon l'une quelconque des revendications 1 à 6,
dans lequel au moins un parmi la bague de palier (102) ou le corps de base (101) présente une ouverture de fixation (109),
dans lequel l'autre parmi la bague de palier (102) ou le corps de base (101) présente de manière correspondante une broche (110) saillante, et
dans lequel la broche (110) vient en prise dans l'ouverture de fixation (109) de telle manière que la bague de palier (102) est fixée sur le corps de base (101).

8. Dispositif d'entraînement (100) selon la revendication 7,
dans lequel l'ouverture de fixation (109) présente un trou allongé dont la longueur s'étend dans la direction périphérique (105).

9. Dispositif d'entraînement (100) selon la revendication 7 ou 8,
dans lequel l'ouverture de fixation (109) présente un autre trou allongé dont la longueur s'étend dans la direction radiale (202).

10. Procédé de réglage d'une bouche d'aération d'un bâtiment, ledit procédé présentant une étape consistant à
régler la bouche d'aération au moyen d'un dispositif d'entraînement (100) selon l'une quelconque des revendications 1 à 9.
